# EUROPEAN PATENT APPLICATION

(11) **EP 2 177 400 A1**
(43) Date of publication of application: **21.04.2010**
(21) Application number: 09012855.4
(22) Date of filing: 12.10.2009
(51) Int. Cl.: B60Q 7/00

(54) **Movable triangular warning sign for motor vehicles**

(30) Priority: 17.10.2008 IT TO20080137 U
(71) Applicant: Lettieri, Annunziata, 10022 Carmagnola (TO) (IT)
(72) Inventor: Lettieri, Annunziata, 10022 Carmagnola (TO) (IT)
(74) Representative: Aprà, Mario

(57) **Abstract**

Movable triangular warning sign for motor vehicles, comprising three jointed arms (1, 2, 3) which form a triangle when in use and can be folded to occupy minimum space, wherein each arm (1, 2, 3) comprises a supporting back part (6.1) suitable for receiving a corresponding retroreflecting fixed front band (6.2), **characterised in that** each of said arms (1, 2, 3) comprises a respective electrical circuit (6.3) with relative light signalling means (6,5), which is positioned between said supporting back part (6.1) and said retroreflecting front band (6.2) so that said light signalling means (6.5) are electrically powered by means of an electrical power source (16, 20) when the arms are arranged in a triangle during use.

## Description

The present invention concerns a movable triangular warning sign. A movable triangular sign is known, consisting of three jointed arms, which form a triangle when in use and can be folded to occupy minimum space for storage in a suitable compartment or case when not in use (US 7,258,506). A movable warning sign having light signalling means to improve visibility is also known (US 7,142,103) .

Use of the first movable warning sign (US 7,258,506) highlights the limited retroreflecting characteristics suitable for sending a light signal to the oncoming vehicles. Use of the second type of movable warning sign, on the other hand, has the drawbacks of bulk, weight and poor ease of handling.

The present invention has the aim of providing a movable triangular warning sign for motor vehicles which is suitable for eliminating the above-mentioned drawbacks.

Furthermore, the aim of the present invention is to provide a movable warning sign as specified which has a simplified structure, limited cost and is easy to use.

In view of said aims, the present invention provides a movable triangular warning sign for motor vehicles, the essential characteristic of which forms the subject of claim 1.

Further advantageous characteristics of the invention are described in the dependent claims.

The above-mentioned claims are taken as read in full.

Below, a detailed description is given of an example of execution of the invention with reference to the drawings, provided only by way of non-limiting example, in which:
Fig. 1 is a frontal view of the movable triangular warning sign, according to the invention, during use;
Fig. 2 is a rear view of the movable warning sign during use, with battery power supply;
Fig. 3 is similar to fig. 2, but shows a variation with cable power supply;
Fig. 4 is a frontal view of the movable warning sign when closed, occupying minimum space;
Figures 5, 6, 7, 8 are section views along the lines V-V VI-VI of fig. 1 and VII-VII and VIII-VIII of fig. 2 respectively.

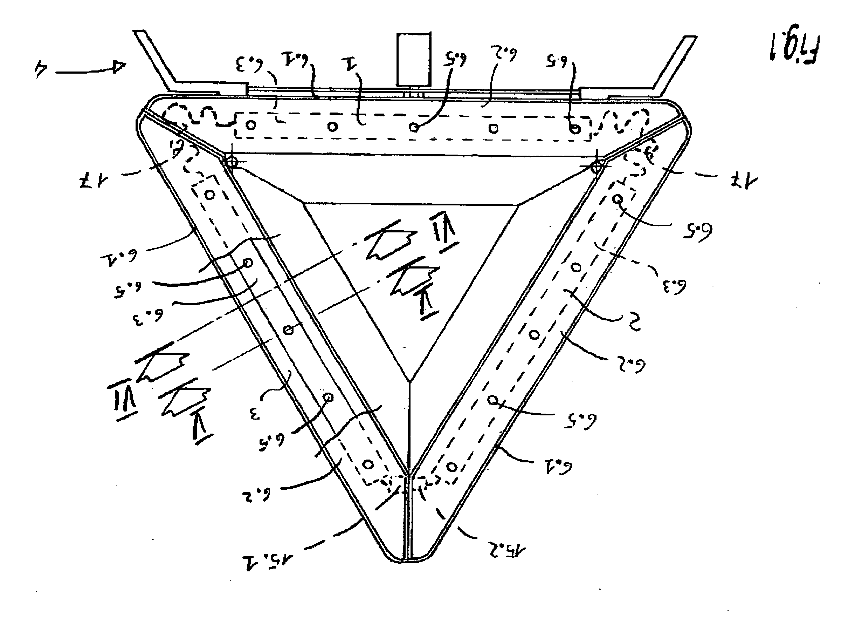

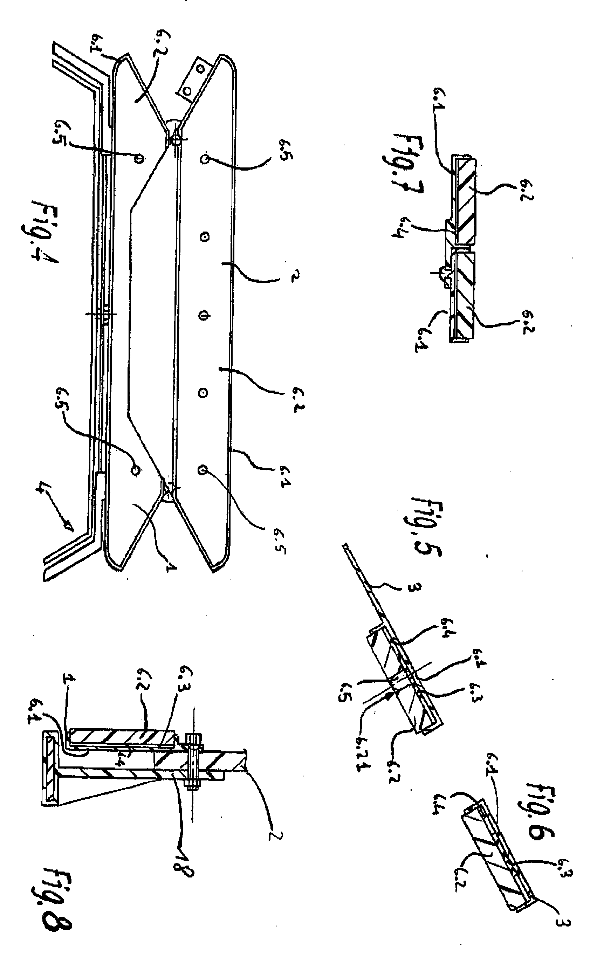

Figure 1 shows the invention in the open configuration ready for use. As can be clearly seen, the movable triangular warning sign for motor vehicles, according to the invention, comprises three identical arms (1, 2, 3) which are jointed so that it is possible and easy to switch from the open configuration of figure 1 to the closed configuration of figure 4, by oscillation with respect to the intermediate arm 1, horizontal during use, of the other two arms 2 and 3. The arm 1 is made integral with the supporting base 4.

Each arm 1, 2, 3 is formed substantially of two parts joined together: a channel-shaped back 6.1, made of plastic, and a retroreflecting rigid front band 6.2, housed in said channel by means of mating surfaces. According to the invention, between said two parts 6.1 and 6.2 a longitudinal groove 6.4 is provided extending substantially throughout the length of the arm. Said groove houses a printed circuit strip 6.3 for powering and controlling a plurality of LEDs 6.5. Figure 1 shows a section of printed circuit 6.3 with LED 6.5 with reference to the arm 2.

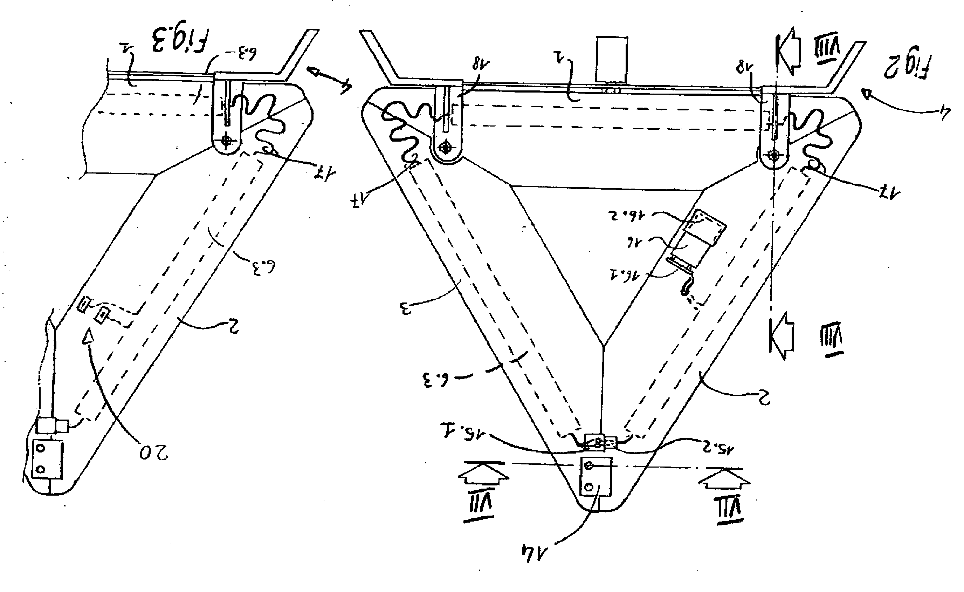

Figure 2 shows the rear side of the invention. The reference numbers 15.1 and 15.2 indicate the two parts of a male/female electrical connector at the upper ends of the printed circuits 6.3 of the arms 2, 3, necessary for closing the circuit and which connect when the triangular sign is set up; 16.1 indicates terminals for a power supply battery 16 positioned fixed in a respective housing 16.2; 17 indicates flexible electrical connectors between the remaining ends of the printed circuits 6.3. 18 indicates the supporting brackets for the triangular sign with respect to the base 4 thereof.

When the movable warning sign is not in use, it is configured as shown in figure 4 with the three arms folded in order to minimise the overall dimensions.

In the example given in figures 5 and 6 it can be seen that, by way of non-limiting example for realisation of the invention in question, the arms are composed of said two parts 6.1 and 6.2 between which are the respective printed circuit 6.3 and the corresponding LED light signalling means 6.5. The part 6.2 is provided with holes 6.21, as shown in figure 5, in which the corresponding LEDs 6.5 are housed.

As a variation, instead of the holes, it is possible to provide in the retroreflecting band 6.2 transparent windows corresponding to the LEDs in order to guarantee passage of the light beam emitted by the LEDs; said band 6.2 can be made in such a way as to guarantee the emission of light beams by the light signalling means. The base of the movable warning sign is made in compliance with the directives of art. 162 of the Italian Highway Code.

Furthermore, to guarantee operation of the light signalling system, a system for powering the lighting equipment by battery 16 is provided, as already mentioned.

With reference to figure 3, the reference number 20 indicates socket connection means to the vehicle electrical system (for example via cigar lighter socket or other electrical sockets provided inside the vehicle). Said socket means 20 are, for example, designed for two-pin plug.

In said case a connection cable will be provided, of appropriate length in compliance with the law, and relative housing in which it can be stored when not required.

When required by the user, therefore, the movable warning sign can be easily taken out of the vehicle that has broken down and, by means of elementary operations, set up for use. To switch from the storage mode of figure 4 to the operating mode of figure 1, via the base, the arms are simply rotated until the triangular shape is obtained. Having done this, the snap fasteners 14 must be secured, thus closing the circuit by means of the connectors 15.1/15.2. Advantageously, in the above-mentioned electrical circuit, electrical means are provided (known per se and not illustrated) for intermittence of the light emission and/or light effects by the LEDs 6.5. It will be possible to provide automatic closure of the circuit when the snap fasteners 14 are secured. It will be the job of the user to position the movable warning sign at the distance from the vehicle established by law and to decide whether to activate the light signalling means of said movable warning sign. The length of any power supply/recharge cable for the movable warning sign also provides an indicator of the exact position in which to place the movable warning sign in compliance with the law.

In the example illustrated, the groove 6.4 housing the printed circuit 6.3 with relative light signalling means 6.5 is provided between the back 6.1 and the front band 6. As a variation, it can be provided in one of said two parts.

The movable danger sign, according to the present invention, can be used for all traffic situations that require the use of a triangular warning sign; in said case it will be provided with the further signals established by the Highway Code.

## Claims

1. Movable triangular warning sign for motor vehicles, comprising three jointed arms (1, 2, 3) which form a triangle when in use and can be folded to occupy minimum space, wherein each arm (1, 2, 3) comprises a supporting back part (6.1) suitable for receiving a corresponding retroreflecting fixed front band (6.2), **characterised in that** each of said arms (1, 2, 3) comprises a respective electrical circuit (6.3) with relative light signalling means (6.5), which is positioned between said supporting back part (6.1) and said retroreflecting front band (6.2) so that said light signalling means (6.5) are electrically powered by means of an electrical power source (16, 20) when the arms are arranged in a triangle during use.

2. Movable triangular warning sign for motor vehicles as claimed in claim 1, **characterised in that** in said back (6.1) and/or in said front band (6.2), between said parts respectively, a groove is provided (6.4) for housing a printed circuit (6.3) with relative light signalling means (6.5).

3. Movable triangular warning sign for motor vehicles as claimed in claim 1 and/or 2, **characterised in that** in said front band (6.2) holes (6.21) are provided corresponding to said light signalling means (6.5).

4. Movable triangular warning sign for motor vehicles as claimed in claim 1 and/or 2, **characterised in that** transparent windows are provided in said front band (6.2) at the level of the light signalling means (6.5).

5. Movable triangular warning sign for motor vehicles as claimed in one or more of the preceding claims, **characterised in that** the two circuits (6.3) incorporated respectively in the arms (2, 3) which are oblique during use, each have at one end a respective part of an electrical connector (15.1, 15.2), while the remaining ends of the electrical circuits (6.3) of said arms are electrically connected by means of flexible electrical wires (17) so that during use of said signal, the electrical circuit between said parts and with respect to an electrical power supply source (16, 20) closes automatically.

6. Movable triangular warning sign for motor vehicles as claimed in one or more of the preceding claims, **characterised in that** it comprises electrical/electronic means for intermittence and/or light effects electrically connected in said circuit.

7. Movable triangular warning sign for motor vehicles as claimed in one or more of the preceding claims, **characterised in that** it comprises electrical means with current socket (20) for connection to an electrical power source by means of an electrical cable with corresponding electrical plug, and **in that** said cable is electrically branched in a dismountable way with respect to an electrical socket on board the vehicle and indicates/sets the correct distance at which said movable warning sign must be positioned.

8. Movable triangular warning sign for motor vehicles as claimed in one or more of the preceding claims, **characterised in that** it is applied in any traffic situation requiring the use of a triangular warning sign; in said case it will be provided with the further signals established for the specific use.
